# EUROPEAN PATENT APPLICATION

(11) **EP 0 880 132 A2**
(43) Date of publication of application: **25.11.1998**
(21) Application number: 98109101.0
(22) Date of filing: 19.05.1998
(51) Int. Cl.: G11B 19/12, G11B 19/247, G11B 19/28

(54) **Pre-pit detecting apparatus and method**

(30) Priority: 20.05.1997 JP 130061/97
(71) Applicant: PIONEER ELECTRONIC CORPORATION, Meguro-ku Tokyo-to (JP)
(72) Inventor: Kuroda, Kazuo, Pioneer Electronic Corp., Tokorozawa-shi, Saitama-ken (JP); Yoshida, Masayoshi, Pioneer Electronic Corp., Tokorozawa-shi, Saitama-ken (JP)
(74) Representative: Viering, Jentschura & Partner

(57) **Abstract**

A pre-pit (4) is detected by a pre-pit detecting apparatus (S) when recording record information onto a record medium (1), on which a moving control information to control a moving speed of said record medium when recording the record information is recorded by wobbling an information track (2, 3), at a frequency corresponding to the moving control information, and on which record control information to control recording the record information is also recorded in advance by forming the pre-pit in a predetermined phase relation to the wobbled information track. The pre-pit detecting apparatus is provided with: a pickup device (10) for simultaneously emitting a light beam (B) onto said information track and an adjacent track thereof, and then outputting a reproduction signal based on a reflection light from said information track and said adjacent track; a wobbling signal extracting device (22) for extracting a wobbling signal, which indicates the moving control information, out of the outputted reproduction signal; a synchronization signal generating device (15) for generating a synchronization signal, whose phase and frequency are respectively coincident with those of the extracted wobbling signal and whose maximum amplitude position is set to a position of the pre-pit signal superimposed on the wobbling signal; a modulating device (24) for amplitude-modulating the outputted reproduction signal with the generated synchronization signal; and a detecting device (25, 26) for comparing the amplitude-modulated reproduction signal with a predetermined reference signal and outputting a pre-pit detection signal.

## Description

### BACKGROUND OF THE INVENTION

### 1. Field of the Invention

The present invention relates to an information recording apparatus for recording record information such as video information, audio information or the like to be principally recorded, by reproducing (i) address information or a synchronization signal necessary for a positional retrieval when recording the record information or (ii) rotational control information for a rotational control of the record medium such as a wobbling signal etc., (hereinafter, these are referred to as "pre-information"), onto the record medium of postscript WO (Write Once) type on which the pre-information is recorded in advance (hereafter, referred to as a DVD-R (DVD-Recordable)) among high density record media represented by the DVD whose record density is drastically improved as compared with a conventional CD (Compact Disk) and the like. More specifically, the present invention relates to a pre-pit detecting apparatus for detecting a pre-pit formed on the DVD-R or the like in such an information recording apparatus.

### 2. Description of the Related Art

There is a CD-R (CD-Recordable) as an optical disk having a record capacity similar to that of the CD, on which the pre-information is recorded beforehand and onto which the postscript information can be recorded afterward in accordance with the pre-information.

In the CD-R, at a pre-formatting step of manufacturing the CD-R, an information track (a groove track or a land track), onto which the record information is to be recorded, is wobbled into a wave shape at a frequency corresponding to a signal into which the pre-information to be recorded is beforehand FM (Frequency Modulation)-modulated, so that the preinformation is recorded.

When the record information is actually recorded onto the conventional CD-R, a wobbling frequency of the wobbled track is detected. A standard clock to rotation-control the CD-R is extracted on the basis of the detection. A drive signal to rotation-control a spindle motor for rotating the CD-R is generated on the basis of the extracted standard clock. A clock signal for a recording operation including timing information synchronized with the rotation of the CD-R is generated.

Moreover, as for the address information indicative of an address on the CD-R required when recording the record information, the pre-information is reproduced when recording the record information. Then, a position to be recorded is detected on the basis of the reproduced pre-information, to thereby record the record information.

However, the interval between the information tracks adjacent to each other on the above described DVD-R is approximately half of that on the CD-R because of the demand for improving the record density. Thus, it may be difficult to accurately detect the wobbling signal since the wobbling signals of the adjacent information tracks interfere with each other in case that the pre-information is tried to be obtained by wobbling the information track on the DVD-R in the same manner as the conventional wobbling technique.

Therefore, in a case of the above described DVD-R, an information track (for example, a groove track) in the DVD-R is wobbled at a frequency on the basis of the standard clock, so that the rotational control information is recorded thereon. In addition, the pre-information is recorded by forming a pre-pit corresponding to the pre-information on a track (for example, a land track) between the two information tracks. Further, in order to reproduce the standard clock from the pre-pits as the occasion demand, the pre-pits are formed substantially uniform over the whole recording surface of the DVD-R.

In this manner, the pre-information is obtained by detecting such pre-pits, so that the rotational control and the recording control are accurately performed on the basis of the pre-information.

By the way, the detection of the pre-pit is performed in a following manner.

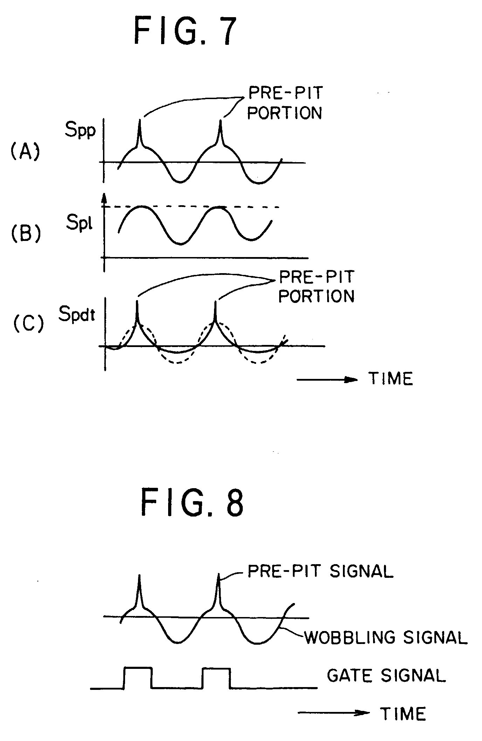

Namely, at first, a gate signal as shown in FIG. 8 is generated, which is synchronized with a signal including a wobbling frequency component (hereinafter, referred to as a "wobbling signal") obtained by irradiating the information track with a light beam.

Then, by comparing the wobbling signal with a predetermined threshold signal, a signal component of the wobbling signal exceeding the threshold value is extracted.

Then, by calculating a logical product of this extracted signal and the gate signal, the pre-pit signal which is superimposed on the wobbling signal is extracted.

Therefore, in case that the noise is included in the wobbling signal, since the level difference between a signal portion corresponding to the pre-pit and the other portion of the wobbling signal is so small that the noise component is erroneously detected as the pre-pit detection signal.

### SUMMARY OF THE INVENTION

The present invention is proposed in view of the above mentioned problems. It is therefore an object of the present invention to provide an apparatus for and a method of detecting a pre-pit signal, which can accurately detect the pre-pit signal, even if a noise component is superimposed on a wobbling signal.

The above object of the present invention can be achieved by a pre-pit detecting apparatus for detecting a pre-pit when recording record information onto a record medium, on which a moving control information to control a moving speed of said record medium when recording the record information onto said record medium is recorded by wobbling an information track, where the record information is to be recorded on said record medium, at a frequency corresponding to the moving control information, and on which record control information to control recording the record information onto said record medium is also recorded in advance by forming the pre-pit in a predetermined phase relation to the wobbled information track. The pre-pit detecting apparatus is provided with: a pickup device for simultaneously emitting a light beam onto said information track and an adjacent track, which is adjacent to said information track, and then outputting a reproduction signal based on a reflection light from said information track and said adjacent track of the emitted light beam; a wobbling signal extracting device for extracting a wobbling signal, which indicates the moving control information, out of the outputted reproduction signal; a synchronization signal generating device for generating a synchronization signal, whose phase and frequency are respectively coincident with those of the extracted wobbling signal and whose maximum amplitude position is set to a position of the pre-pit signal superimposed on the wobbling signal; a modulating device for amplitude-modulating the outputted reproduction signal with the generated synchronization signal; and a detecting device for comparing the amplitude-modulated reproduction signal with a predetermined reference signal and outputting a pre-pit detection signal.

According to the pre-pit detecting apparatus of the present invention, the light beam is simultaneously emitted by the pickup device onto the information track and the adjacent track, and the reproduction signal based on the reflection light from the information track and the adjacent track of the emitted light beam is outputted by the pickup device. Then, the wobbling signal, which indicates the moving control information, is extracted out of the outputted reproduction signal by the wobbling signal extracting device. This extracted wobbling signal is to be used not only for obtaining the moving control information but also for generating the synchronization signal. Then, the synchronization signal, whose phase and frequency are respectively coincident with those of the extracted wobbling signal and whose maximum amplitude position is set to a position of the pre-pit signal superimposed on the wobbling signal, is generated by the synchronization signal generating device. Then, the outputted reproduction signal is amplitude-modulated with the generated synchronization signal by the modulating device. By this amplitude-modulation, the amplitude of a first portion of the reproduction signal, other than a second portion of the reproduction signal on which the pre-pit signal is superimposed, is reduced, so that the second portion of the reproduction signal is relatively emphasized or increased in the reproduction signal. Finally, the amplitude-modulated reproduction signal is compared with the predetermined reference signal and the pre-pit detection signal is outputted by the detecting device. Thus, the emphasized second portion of the reproduction signal (on which the pre-pit signal is superimposed) can be surely compared with the reference signal, resulting in that the pre-pit detection signal which is accurately detected can be outputted from the pre-pit detecting apparatus of the present invention.

In this manner, even in case that the noise component is superimposed on the reproduction signal, it is still possible to accurately detect the pre-pit signal.

In one aspect of the pre-pit detecting apparatus, the predetermined reference signal is a signal obtained by superimposing a direct current voltage having a predetermined voltage value on the extracted wobbling signal.

According to this aspect, even in case that the output of the extracted wobbling signal is fluctuated due to the influence of the adjacent track, it is still possible to accurately detect the pre-pit detection signal by canceling the fluctuation.

In another aspect of the pre-pit detecting apparatus, the record control information includes record position information indicative of a position on the record medium where the record information is to be recorded.

According to this aspect, at the time of recording the record information, it is possible to exactly control the moving speed of the record medium and exactly recognize the position on the record medium where the record information is to be recorded by use of the record position information, so as to exactly record the record information while accurately detecting the pre-pit detection signal.

In another aspect of the pre-pit detecting apparatus, the record medium may be a DVD such as a DVD-R.

According to this aspect, it is possible to exactly control the rotation of the DVD, and record the record information onto the DVD while accurately detecting the pre-pit detection signal.

In another aspect of the pre-pit detecting apparatus, one of the information track and the adjacent track is one of a land track and a groove track formed on the record medium, and the other of the information track and the adjacent track is the other of the land track and the groove track.

According to this aspect, the light beam is simultaneously emitted by the pickup device onto the groove track and the land track, and the reproduction signal based on the reflection light from the groove track and the land track of the emitted light beam is outputted by the pickup device. Therefore, even in case of the record medium on which the record control information is recorded on the land track (or the groove track), it is still possible to record the record information onto the groove track (or the land track) while accurately detecting the pre-pit detection signal.

The above object of the present invention can be also achieved by a pre-pit detecting method of detecting a pre-pit when recording record information onto a record medium, on which a moving control information to control a moving speed of said record medium when recording the record information onto said record medium is recorded by wobbling an information track, where the record information is to be recorded on said record medium, at a frequency corresponding to the moving control information, and on which record control information to control recording the record information onto said record medium is also recorded in advance by forming the pre-pit in a predetermined phase relation to the wobbled information track. The pre-pit detecting method has: a pickup process of simultaneously emitting a light beam onto said information track add an adjacent track, which is adjacent to said information track, and then outputting a reproduction signal based on a reflection light from said information track and said adjacent track of the emitted light beam; a wobbling signal extracting process of extracting a wobbling signal, which indicates the moving control information, out of the outputted reproduction signal; a synchronization signal generating process of generating a synchronization signal, whose phase and frequency are respectively coincident with those of the extracted wobbling signal and whose maximum amplitude position is set to a position of the pre-pit signal superimposed on the wobbling signal; a modulating process of amplitude-modulating the outputted reproduction signal with the generated synchronization signal; and a detecting process of comparing the amplitude-modulated reproduction signal with a predetermined reference signal and outputting a pre-pit detection signal.

According to the pre-pit detecting method of the present invention, the light beam is simultaneously emitted in the pickup process onto the information track and the adjacent track, and the reproduction signal based on the reflection light from the information track and the adjacent track of the emitted light beam is outputted in the pickup process. Then, the wobbling signal is extracted out of the outputted reproduction signal in the wobbling signal extracting process. Then, the synchronization signal is generated in the synchronization signal generating process. Then, the outputted reproduction signal is amplitude-modulated with the generated synchronization signal in the modulating process. Finally, the amplitude-modulated reproduction signal is compared with the predetermined reference signal and the pre-pit detection signal is outputted in the detecting process.

Thus, in the same manner as in the aforementioned pre-pit detecting apparatus of the present invention, even in case that the noise component is superimposed on the reproduction signal, it is still possible to accurately detect the pre-pit signal.

In one aspect of the pre-pit detecting method, the predetermined reference signal is a signal obtained by superimposing a direct current voltage having a predetermined voltage value on the extracted wobbling signal.

In another aspect of the pre-pit detecting method, the record control information includes record position information indicative of a position on the record medium where the record information is to be recorded.

In another aspect of the pre-pit detecting method, the record medium may be a DVD such as a DVD-R.

In another aspect of the pre-pit detecting method, one of the information track and the adjacent track is one of a land track and a groove track formed on the record medium, and the other of the information track and the adjacent track is the other of the land track and the groove track.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a perspective view showing one example of a configuration of a DVD-R for use in an embodiment;
FIG. 2 is a diagram showing one example of a record format of the DVD-R for use in the embodiment;
FIG. 3 is a block diagram showing a schematic configuration of an information recording apparatus in the embodiment;
FIG. 4 is a block diagram showing a detailed configuration of a pre-pit signal decoder in the embodiment;
FIG. 5 is a block diagram showing a detailed configuration of a servo circuit for outputting a synchronization signal to the pre-pit signal decoder in FIG. 4;
FIG. 6 is a timing chart showing wave forms of various signals in the pre-pit signal decoder in the embodiment;
FIG. 7 is a timing chart showing wave forms of various signals for explaining the amplitude modulation; and
FIG. 8 is a timing chart showing wave forms of a reproduction signal and a gate signal for explaining a method of detecting a pre-pit signal according to the related art.

### DETAILED DESCRIPTION OF THE PREFERRED EMBODIMENTS

Preferred embodiments for the present invention are explained with reference to the drawings.

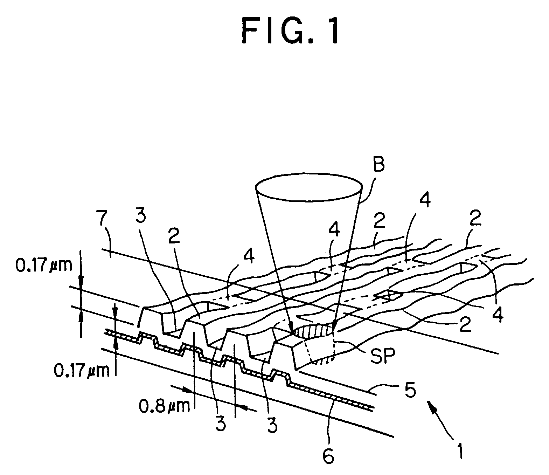

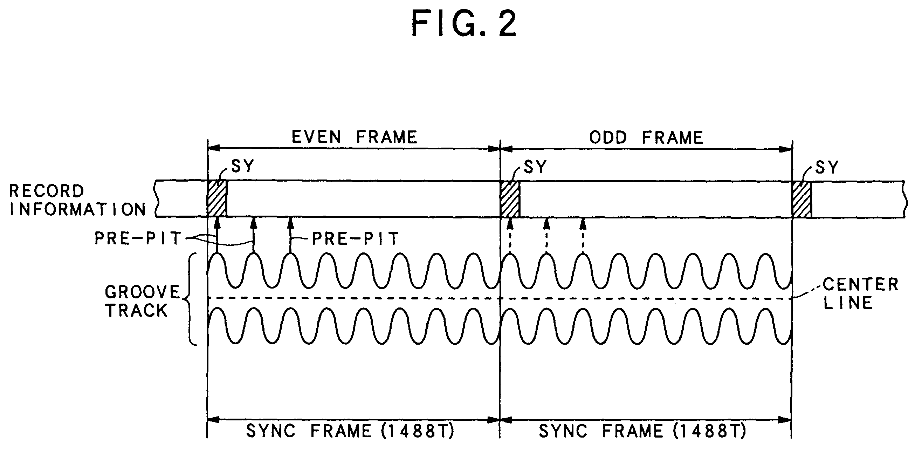

At first, a DVD-R as one example of a record medium for use in the embodiment, on which a pre-pit is formed in correspondence with pre-information as record control information and on which rotational control information is also recorded by wobbling a groove track described later at a predetermined frequency is explained with reference to FIGs. 1 and 2.

At first, a structure of the DVD-R is explained with reference to FIG. 1.

In FIG. 1, a DVD-R 1 is a pigment type of DVD-R which has a pigment film 5 and onto which information can be written only once. In the DVD-R 1, there is formed a groove track 2 servicing as an information track and a land track 3 servicing as an adjacent track to guide to the groove track 2 a light beam B, such as a laser beam or the like as a reproducing light or a recording light. Moreover, the DVD-R 1 has: a protection film 7 to protect the groove track 2 and the land track 3; and a metallic deposition surface 6 to reflect the light beam B when reproducing the recorded information. A pre-pit 4 corresponding to pre-information is formed on the land track 3. This pre-pit 4 is beforehand formed before a shipment of the DVD-R 1.

Moreover, in the DVD-R 1, the groove track 2 is wobbled at a frequency corresponding to a rotational speed of the DVD-R 1. The recording operation of the rotational control information by wobbling the groove track 2 is beforehand executed before the shipment of the DVD-R 1, similarly to the pre-pit 4.

When recording the record information (hereafter, this implies the information, such as video information, audio information and the like to be principally recorded other than the pre-information and the rotational control information) onto the DVD-R 1, a frequency in wobbling of the groove track 2 is detected by an information recording apparatus described later, to thereby obtain the rotational control information and the DVD-R 1 is rotation-controlled at a predetermined rotational speed. Further, the pre-pit 4 is detected to beforehand obtain the pre-information to thereby set an optimum output of the light beam B servicing as the recording or reproducing light in accordance with the obtained pre-information. Furthermore, the address information indicative of the position on the DVD-R 1 onto which the record information is to be recorded is obtained. The record information is then recorded onto the corresponding record position on the basis of this obtained address information.

When recording the record information, the light beam B is emitted such that a center thereof coincides with the center of the groove track 2. Then, a record information pit corresponding to the record information is formed on the groove track 2 to thereby record the record information. At this time, a size of a light spot SP is set such that one portion of the light spot SP is emitted not only onto the groove track 2 but also onto the land track 3, as shown in FIG. 1. Then, the pre-information is detected from the pre-pit 4 by a push-pull method (a push-pull method using a light detector divided by a division line parallel to a rotational direction of the DVD-R 1 (hereafter, referred to as "a radial push-pull method")) using some of the reflection light from the light spot SP on the land track 3 to thereby obtain the pre-information. Further, the wobbling signal is detected from the groove track 2 by using the reflection light from the light spot SP on the groove track 2 to thereby obtain a clock signal for the rotation control.

Next, a record format of the pre-information and the rotational control information recorded in advance on the DVD-R 1 for use in the embodiments is explained with reference to FIG. 2. In FIG. 2, an upper block shows the record format for the record information, each of wave forms in wave shapes at a lower block shows a wobbling state at the groove track 2 on which the record information is to be recorded (i. e., corresponding to a plan view of the groove track 2), and upward arrows between the wobbling state of the groove track 2 and the record information schematically show positions on which the pre-pits 4 are formed respectively. In FIG. 2, the wobbling state of the groove track 2 is indicated by using an amplitude higher than an actual amplitude for the purpose of an easy understanding. The record information is recorded on a central line of the groove track 2.

As shown in FIG. 2, the record information recorded on the DVD-R 1 in the embodiment is divided in advance for each synchronization frame as an information unit. And that, one recording sector is composed of 26 synchronization frames. Moreover, one ECC (Error Correcting Code) block is composed of 16 recording sectors. One synchronization frame has a length equal to 1488 times (1488T) of the unit length (hereafter, referred to as T) corresponding to a pit interval prescribed by the record format when recording the record information. Furthermore, a synchronization information SY to achieve a synchronization for each synchronization frame is recorded on a portion having a length of 14T at the leading head of one synchronization frame.

On the other hand, the pre-information recorded on the DVD-R 1 in the embodiment is recorded for each synchronization frame. Whenever recording the pre-information by means of the pre-pit 4, one pre-pit 4 to indicate a synchronization signal in the pre-information is formed on a land track 3 adjacent to an area on which the synchronization information SY in each synchronization frame in the record information is recorded. Further, two or one pre-pit 4 to indicate a content of the pre-information to be recorded (address information) is formed on a land track 3 adjacent to a former portion within the synchronization frame other than the synchronization information SY (incidentally, as for the former portion within the synchronization frame other than the synchronization information SY, there may be a case that the pre-pit 4 is not formed depending upon the content of the pre-information to be recorded). At this time, in the embodiment, in one recording sector, the pre-pit 4 is formed only on the synchronization frames having an even number (hereafter, referred to "an EVEN frame") or only on the synchronization frames having an odd number (hereafter, referred to as "an ODD frames"), so that the pre-information is recorded. Namely, in FIG. 2, if the pre-pit 4 is formed on the EVEN frame (shown by upward solid arrows in FIG. 2), the pre-pits 4 are not formed on the ODD frames adjacent to the EVEN frame.

On the other hand, the groove track 2 is wobbled at a constant wobbling frequency f₀ of 140 kHz (i. e., a frequency at which one synchronization frame corresponds to 8 waves) over all the synchronization frames. Then, a signal for the rotational control of the spindle motor is detected by detecting the constant wobbling frequency f₀, in the information recording apparatus described later.

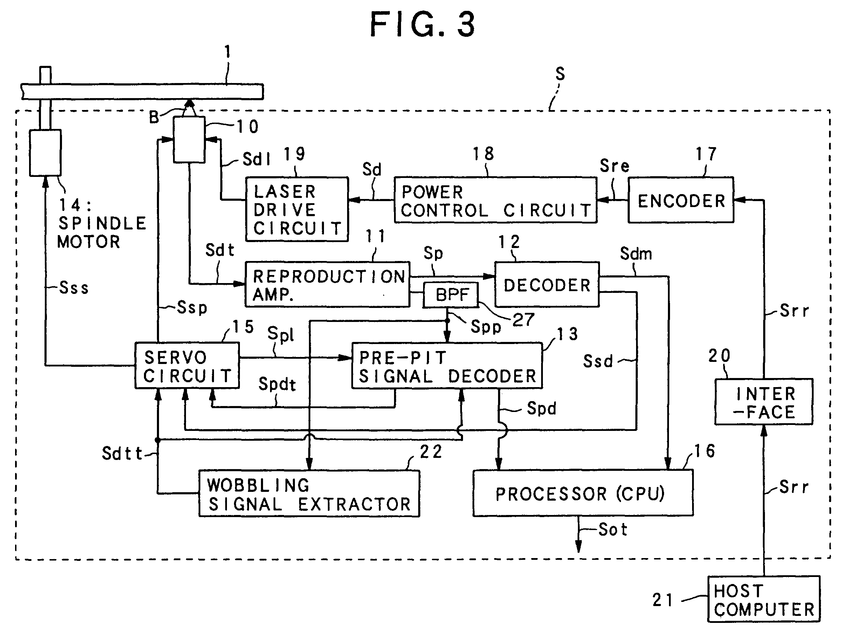

Next, an embodiment of the information recording apparatus according to the present invention is explained with reference to FIGs. 3 to 6. Hereinbelow, an embodiment is explained in which the present invention is applied to an information recording apparatus for recording digital information sent from a host computer onto the DVD-R 1.

At first, a whole configuration and operation of the information recording apparatus as the embodiment is explained with reference to FIG. 3. In the embodiment described below, the pre-pit 4 containing the address information on the DVD-R 1 and the groove track 2 which wobbles are formed beforehand on the DVD-R 1. When recording the digital information, the pre-pit 4 is detected at first to thereby obtain the address information on the DVD-R 1, and then the record position is detected, at which the digital information i. e., the record information is recorded onto the DVD-R 1.

As shown in FIG. 3, an information recording apparatus S as the embodiment is provided with: a pickup 10 servicing as one example of a pickup device and a recording device; a reproduction amplifier 11; a decoder 12; a pre-pit signal decoder 13; a spindle motor 14 servicing as one example of a rotating device; a servo circuit 15 servicing as one example of a synchronization signal generating device; a processor (CPU) 16; an encoder 17; a power control circuit 18; a laser drive circuit 19; an interface 20; and a wobbling signal extractor 22 servicing as one example of an information extracting device. A digital information Srr to be recorded from an external host computer 21 is inputted through the interface 20 to the information recording apparatus S.

Next, the whole operation is explained.

The pickup 10 is provided with a laser diode, a polarization beam splitter, an objective lens, a light detector and so on which are not shown, and emits the light beam B to the information record surface of the DVD-R 1 on the basis of a laser drive signal Sdl. On the basis of a reflection light of the light beam B, the pickup 10 detects the wobbling frequency of the groove track 2 and the pre-pit 4 by using the radial push-pull method, and thereby records the digital information Srr to be recorded. Further, if the digital information is already recorded, the pickup 10 detects the already recorded digital information on the basis of the reflection light of the light beam B.

The reproduction amplifier 11 amplifies a detection signal Sdt including the information corresponding to the wobbling frequency of the groove track 2 and the pre-pit 4 outputted by the pickup 10, and then outputs a pre-information signal Spp corresponding to the wobbling frequency of the groove track 2 and the pre-pit 4. Further, if the digital information is already recorded, the reproduction amplifier 11 outputs an amplification signal Sp corresponding to the already recorded digital information.

After that, the decoder 12 applies an 8-16 demodulation and a de-interleave operation to the amplification signal Sp so as to decode the amplification signal Sp, and thereby outputs a demodulation signal Sdm and a servo demodulation signal Ssd.

On the other hand, after a high frequency component of the pre-information signal Spp outputted from the reproduction amplifier 11 is removed by a BPF (Band Pass Filter) 27, the pre-information signal Spp is inputted to the pre-pit decoder 13 and the wobbling signal extractor 22.

The pre-pit signal decoder 13 extracts only a signal obtained by detecting the pre-pit 4 contained in the pre-information signal Spp, then outputs it as a pre-pit detection signal Spdt to the servo circuit 15, and decodes it to thereby output a corresponding demodulation pre-pit signal Spd to the processor 16.

On the other hand, the wobbling signal extractor 22 extracts only the wobbling frequency of the groove track 2 included in the pre-information signal Spp to thereby output the extraction signal Sdtt to the servo circuit 15.

The servo circuit 15 outputs a pickup servo signal Ssp for a focus servo control and a tracking servo control in the pickup 10, on the basis of the pre-pit detection signal Spdt and the servo demodulation signal Ssd. Moreover, on the basis of an extraction signal Sdtt described later, the servo circuit 15 uses the information corresponding to the wobbling frequency f₀ included in the extraction signal Sdtt and then outputs a spindle servo control signal Sss to thereby servo-control the rotation of the spindle motor 14.

On the other hand, the interface 20 performs, under a control of the processor 16, an interface operation for the digital information Srr sent from the host computer 21 i. e., taking this into the information recording apparatus S to thereby output the digital information Srr to the encoder 17.

The encoder 17 is provided with an ECC generator, an 8-16 modulator, a scrambler and the like which are not shown, and constitutes the ECC block which is a unit to perform an error correction when reproducing, on the basis of the digital information Srr, and further applies the interleave, 8-16 modulation and scramble processes to the ECC block to thereby generate a modulation signal Sre.

After that, on the basis of the modulation signal Sre, the power control circuit 18 outputs a record signal Sd of controlling an output of a laser diode (not shown) within the pickup 10.

Moreover, on the basis of the record signal Sd, the laser drive circuit 19 outputs the laser drive signal Sdl of actually driving the laser diode so that the laser diode in the pickup 10 emits the light beam B.

Finally, the processor 16 uses the inputted demodulation pre-pit signal Spd and then obtains the pre-information to thereby control the operation of recording the digital information Srr at the position on the DVD-R 1 corresponding to the address information included in the pre-information. In parallel to these operations, the processor 16 outputs a reproduction signal Sot corresponding to the digital information, which has been already recorded, to the external on the basis of the demodulation signal Sdm and mainly controls the information recording apparatus S as a whole.

The information recording apparatus S can also reproduce the information recorded on the DVD-R 1. At that time, the reproduction signal Sot is outputted to the external through the processor 16 on the basis of the modulation signal Sdm.

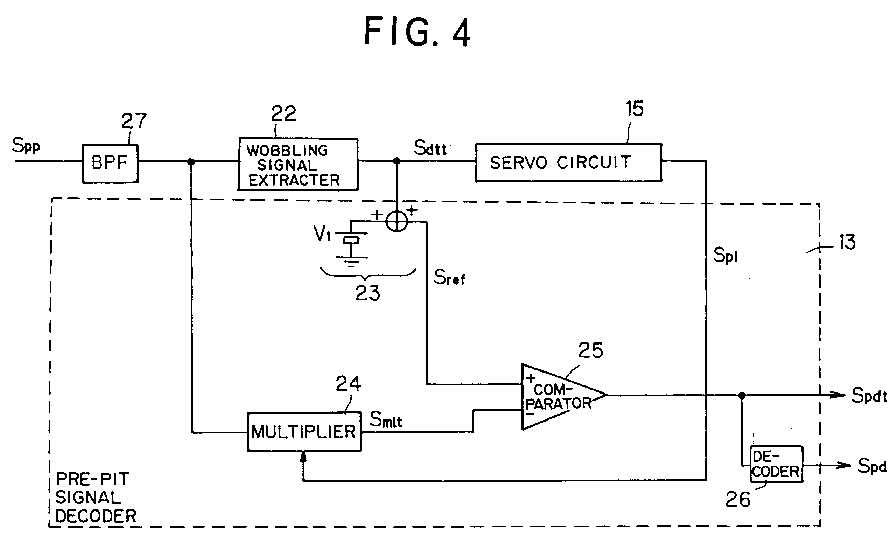

Next, a detailed configuration of the pre-pit decoder 13 in the embodiment is explained with reference to FIGs. 4 to 7.

FIG. 4 is a block diagram of the pre-pit signal decoder 13. In FIG. 4, the BPF 27, the wobbling signal extractor 22 and the servo circuit 15 are also illustrated in order to explain input signals to the pre-pit signal decoder 13.

As shown in FIG. 4, the pre-pit signal decoder 13 is provided with: a threshold setting portion 23, a multiplier 24 as one example of a modulating device, a comparator 25 as one example of a detecting device and a decoder 26.

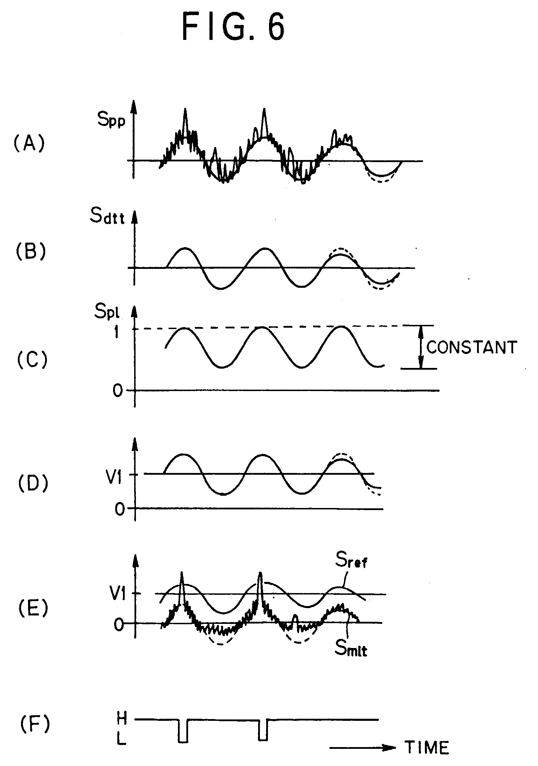

The pre-information signal Spp inputted to the BPF 27 is, as shown in a graph (A) of FIG. 6, a signal including a high frequency noise component. Since this noise component is not removed after the signal passes through the BPF 27, the pre-information signal Spp is inputted to the pre-pit signal decoder 13 and the wobbling signal extractor 22 in a condition including this noise component.

The wobbling signal extractor 22 is provided with a limiter, a BPF, a binary converter and so on, removes a noise component and a pre-pit signal component out of the pre-information signal Spp, and outputs the extraction signal Sdt, which is obtained by extracting only the wobbling frequency component as shown in a graph (B) of FIG. 6, to the servo circuit 15.

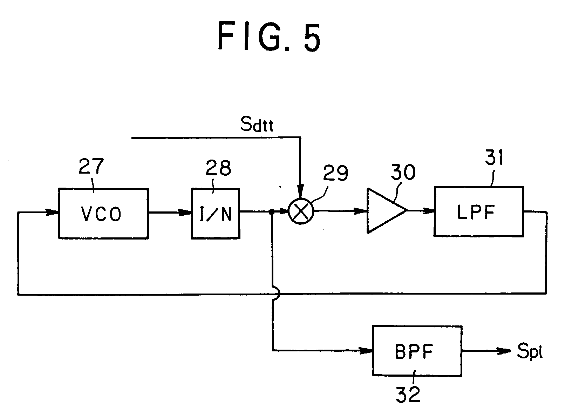

As shown in FIG. 5, the servo circuit 15 is provided with a VCO (Voltage Controlled Oscillator) 27, a frequency divider 28, a multiplier 29, an amplifier 30, an LPF (Low Pass Filter) 31 and a BPF 32 so as to constitute a PLL (Phase Locked Loop) circuit and thereby output a PLL signal Spl synchronized with the extracted wobbling signal Sdtt. This PLL signal Spl is, as shown in a graph (C) of FIG. 6, a signal having a phase and a frequency equal to those of the extracted wobbling signal Sdtt, and the position of the maximum amplitude thereof is coincident with the position of the pre-pit signal superimposed on the wobbling signal Sdtt.

Since the pre-pit 4 is, as mentioned above, positioned at a constant phase position with respect to the groove track 2, the position where the pre-pit 4 is superimposed on the wobbling signal Sdtt is also constant.

Therefore, it is possible to further generate the gate signal from the PLL signal Spl outputted from the servo circuit 15 as mentioned above, and to obtain the pre-pit detection signal by calculating the logical product of this gate signal and the signal more than a predetermined threshold value for the pre-information signal Spp.

However, since the pre-information signal Spp includes, as shown in a graph (A) of FIG. 6, the high frequency component, which is the noise at the time of detection, other than the frequency component corresponding to the wobbling frequency of the groove track 2, the level difference between the signal portion corresponding to the pre-pit and the other signal portion becomes small. Thus, by the method using the gate signal as described above, it is difficult to accurately detect the pre-pit signal.

Therefore, the present embodiment is intended to increase this level difference between the signal portion corresponding to the pre-pit and the other signal portion, by amplitude-modulating the pre-information signal Spp with the PLL signal Spl, so as to enable a high accurate detection of the pre-pit.

The PLL signal Spl as a synchronization signal used for the amplitude modulation in the present embodiment has the phase equal to that of the pre-information signal Spp, and the maximum amplitude position thereof is set to a position where the pre-pit is superimposed. The maximum output value of the PLL signal Spl is set to a unit voltage value of the voltage representing the output of the pre-information signal Spp e. g. 1 [V]. The minimum output value of the PLL signal Spl is set to a positive value so as not to change the polarity of the pre-information signal Spp.

If the PLL signal Spl having such a characteristic is multiplied with the pre-information signal Spp by the multiplier 24 shown in FIG. 4, the pre-information signal Spp is amplitude-modulated. Namely, out of the pre-information signal Spp shown in a graph (A) of FIG. 7, the portion which is multiplied with the signal portion other than the maximum amplitude position of the PLL signal Spl as shown in FIG. (B), is amplitude-modulated such that the amplitude thereof is decreased as shown in a graph (C) of FIG. 7, while the amplitude of the pre-pit signal component corresponding to the maximum amplitude position of the PLL signal Spl is not changed. Therefore, by such a modulation technique, it is possible to emphasize only the component of the pre-pit signal, so that it is possible to reduce the above explained influence of the noise.

In the present embodiment, in addition to performing this type of amplitude modulation, a reference wobbling signal Sref, which is biased with a voltage V1 by the threshold setting portion 23 as shown in FIG. 4, is used as a threshold signal to extract the pre-pit signal component out of the pre-information signal Smlt after the modulation as described above (but the wobbling signal is not simply used as the threshold signal). This is because the output of the wobbling signal itself fluctuates due to the crosstalk from the adjacent groove track 2 as indicated by a dotted line in each of the graphs (B) and (D) of FIG. 6, so that it is difficult to accurately detect the pre-pit signal.

In other words, as shown in a graph (E) of FIG. 6, by comparing the modulated pre-information signal Smlt with the reference wobbling signal Sref biased with the voltage V1, the fluctuation component in the output of the wobbling signal due to the crosstalk is canceled out, so that the pre-pit detection is accurately performed as shown in a graph (F) of FIG. 6.

As described above, according to the present embodiment, by comparing the pre-information signal Smlt modulated with the PLL signal Spl, whose phase is equal to that of the wobbling signal Sdtt and whose maximum amplitude position is set to the pre-pit position, it is possible to accurately detect the pre-pit signal while removing the fluctuation components due to the noise component included in the pre-information signal and the crosstalk of the wobbling signal.

As a result, on the basis of the pre-pit detection signal which accuracy is high, it is possible to accurately perform the rotation control for the DVD-R, and it is also possible to record the digital information signal Srr accurately and surely.

In the above explained embodiment, the position where the pre-pit signal is superimposed on the wobbling signal is coincident with the maximum amplitude position of the wobbling signal. However, the present invention is not limited to this. Namely, the present invention can be applied to a case where the pre-pit signal is superimposed on a position other than the maximum amplitude position. In this case, the maximum amplitude position of the synchronization signal may be set to the superimposed position of the pre-pit signal. More concretely, the phase of the synchronization signal may be shifted on the basis of the phase position of the pre-pit with respect to the wobbling frequency, which is set beforehand.

Moreover, the case in which the present invention is applied to the DVD-R is explained in the above mentioned respective embodiments. However, it is not limited thereto. For example, it can be widely applied to a case in which determined digital information is recorded onto a record medium (for example, a record medium in a form of a tape and the like) on which the information for a record control through a wobbling operation to a track is recorded.

## Claims

1. A pre-pit detecting apparatus (S) for detecting a pre-pit (4) when recording record information onto a record medium (1), on which a moving control information to control a moving speed of said record medium when recording the record information onto said record medium is recorded by wobbling an information track (2, 3), where the record information is to be recorded on said record medium, at a frequency corresponding to the moving control information, and on which record control information to control recording the record information onto said record medium is also recorded in advance by forming the pre-pit in a predetermined phase relation to the wobbled information track, characterized in that said pre-pit detecting apparatus comprises:
a pickup device (10) for simultaneously emitting a light beam (B) onto said information track and an adjacent track, which is adjacent to said information track, and then outputting a reproduction signal based on a reflection light from said information track and said adjacent track of the emitted light beam;
a wobbling signal extracting device (22) for extracting a wobbling signal, which indicates the moving control information, out of the outputted reproduction signal;
a synchronization signal generating device (15) for generating a synchronization signal, whose phase and frequency are respectively coincident with those of the extracted wobbling signal and whose maximum amplitude position is set to a position of the pre-pit signal superimposed on the wobbling signal;
a modulating device (24) for amplitude-modulating the outputted reproduction signal with the generated synchronization signal; and
a detecting device (25, 26) for comparing the amplitude-modulated reproduction signal with a predetermined reference signal and outputting a pre-pit detection signal.

2. A pre-pit detecting apparatus (S) according to claim 1, characterized in that the predetermined reference signal comprises a signal obtained by superimposing a direct current voltage having a predetermined voltage value on the extracted wobbling signal.

3. A pre-pit detecting apparatus (S) according to claim 1 or 2, characterized in that the record control information includes record position information indicative of a position on said record medium (1) where the record information is to be recorded.

4. A pre-pit detecting apparatus (S) according to any one of claims 1 to 3, characterized in that said record medium (1) comprises a DVD.

5. A pre-pit detecting apparatus (S) according to any one of claims 1 to 4, characterized in that one of said information track and said adjacent track comprises one of a land track (3) and a groove track (2) formed on said record medium (1), and the other of said information track and said adjacent track comprises the other of said land track and said groove track.

6. A pre-pit detecting method of detecting a pre-pit (4) when recording record information onto a record medium (1), on which a moving control information to control a moving speed of said record medium when recording the record information onto said record medium is recorded by wobbling an information track (2, 3), where the record information is to be recorded on said record medium, at a frequency corresponding to the moving control information, and on which record control information to control recording the record information onto said record medium is also recorded in advance by forming the pre-pit in a predetermined phase relation to the wobbled information track, characterized in that said pre-pit detecting method comprises:
a pickup process of simultaneously emitting a light beam (B) onto said information track and an adjacent track, which is adjacent to said information track, and then outputting a reproduction signal based on a reflection light from said information track and said adjacent track of the emitted light beam;
a wobbling signal extracting process of extracting a wobbling signal, which indicates the moving control information, out of the outputted reproduction signal;
a synchronization signal generating process of generating a synchronization signal, whose phase and frequency are respectively coincident with those of the extracted wobbling signal and whose maximum amplitude position is set to a position of the pre-pit signal superimposed on the wobbling signal;
a modulating process of amplitude-modulating the outputted reproduction signal with the generated synchronization signal; and
a detecting process of comparing the amplitude-modulated reproduction signal with a predetermined reference signal and outputting a pre-pit detection signal.

7. A pre-pit detecting method according to claim 6, characterized in that the predetermined reference signal comprises a signal obtained by superimposing a direct current voltage having a predetermined voltage value on the extracted wobbling signal.

8. A pre-pit detecting method according to claim 6 or 7, characterized in that the record control information includes record position information indicative of a position on said record medium (1) where the record information is to be recorded.

9. A pre-pit detecting method according to any one of claims 6 to 8, characterized in that said record medium (1) comprises a DVD.

10. A pre-pit detecting method according to any one of claims 6 to 9, characterized in that one of said information track and said adjacent track comprises one of a land track (3) and a groove track (2) formed on said record medium (1), and the other of said information track and said adjacent track comprises the other of said land track and said groove track.
